# EUROPÄISCHE PATENTSCHRIFT

(11) **EP 1 340 573 B1**
(45) Veröffentlichungstag und Bekanntmachung des Hinweises auf die Patenterteilung: **12.07.2006**
(21) Anmeldenummer: 03003502.6
(22) Anmeldetag: 15.02.2003
(51) Int. Cl.: B23B 51/02, B23C 3/32

(54) **Verfahren zur Herstellung eines Bohrers oder Fräsers**
Manufacturing method for a drill bit or for a milling tool
Procédé de fabrication pour un foret ou une fraise

(30) Priorität: 28.02.2002 DE 10208633; 18.09.2002 DE 10243403
(43) Veröffentlichungstag der Anmeldung: 03.09.2003
(73) Patentinhaber: ROBERT BOSCH GMBH, 70442 Stuttgart (DE)
(72) Erfinder: Moser, Bernhard, 88361 Altshausen (DE); Widmann, Rainer, 88085 Langenargen (DE); Füssl, Hans-Peter, 88281 Schlier (DE); Lang, Marco, 88213 Ravensburg (DE)
(74) Vertreter: Eisele, Otten, Roth & Dobler

(56) Entgegenhaltungen:
- DE-A- 19 806 608
- DE-B- 1 284 255
- DE-U- 20 108 179
- FR-A- 902 361
- FR-A- 2 656 554
- US-A- 5 782 145
- US-A- 5 876 202

## Beschreibung

Die Erfindung betrifft ein Verfahren zur Herstellung eines Bohrers oder Fräsers mit wenigstens einer Förderwendel, die einen Ausgangsdurchmesser aufweist, der größer ist als der Durchmesser der fertigen Förderwendel. Ein solches Werkzeug ist aus DE 201 08 179 U1 bekannt.

Hammerbohrer werden üblicherweise aus einem vorgefertigten Rohling hergestellt, der einen genormten Einspannschaft von z.B. 10 mm Durchmesser (SDS-Plus Einspannschaft) aufweist, an den sich ein an den Nenndurchmesser des herzustellenden Bohrers angepasster zylindrischer Schaftbereich für die künftige Förderwendel anschließt. Ist der Förderwendel-Durchmesser des Bohrers kleiner als der Durchmesser des Einspannschaftes, so weist der Rohling dementsprechend eine Abstufung zwischen dem Einspannschaft und dem für die Förderwendel vorgesehenen Bereich auf. Dieser Rohling wird z.B. als Fließpressteil oder als sogenannter Drehling von einem Stangenautomaten hergestellt. Die Förderwendel wird in einem weiteren Arbeitsgang in den entsprechenden Bereich des Rohlings eingearbeitet, beispielsweise mit Hilfe eines spanabhebenden Verfahrens wie Schleifen oder Fräsen oder eines umformtechnischen Verfahrens wie Rollwalzen. Dabei entspricht der Durchmesser des Rohling-Schaftes dem Durchmesser der Förderwendel.

Bohrer dieser Bauart sind aufwändig in der Herstellung, da zunächst ein Rohling mit einem an den späteren Förderwendel-Durchmesser angepassten Durchmesser hergestellt werden muss. Neben diesem Fertigungsschritt mit dem entsprechenden Handling ist auch eine aufwändige Lagerhaltung erforderlich, da für die Vielzahl von unterschiedlichen Bohrern eine Vielzahl von unterschiedlichen Rohlingen auf Lager gehalten werden müssen. Aus der DE 1 284 255 B ist eine Fräsmaschine zur Herstellung von Spiralbohrern bekannt, welche mittels eines Fräswerkzeugs Nuten in einen Bohrerrohling einbringt. Weiterhin ist aus der DE 201 08 179 U1 ein Bohrer bekannt, dessen Spiraldurchmesser kleiner ist als dessen Schaftdurchmesser.

Aus dem Dokument DE 198 06 608 ist eine universell einsetzbare Fräsmaschine bekannt geworden, die die verschiedensten Bearbeitungsvorgänge an einem Werkstück vollzieht. Dabei können gewünschte Profile an Werkstücken mittels der Universal-Fräsmaschine hergestellt werden, ohne dass das Werkstück an eine andere Maschine überführt werden muss. Die Bearbeitung von Bohrern und Fräsern ist an dieser Maschine nicht vorgesehen.

Aufgabe der Erfindung ist es demgegenüber, ein Verfahren zur Herstellung eines Bohrers oder Fräsers vorzuschlagen, das mit weniger Aufwand verbunden ist.

Diese Aufgabe wird ausgehend von einem Verfahren der einleitend genannten Art durch den Anspruch 1 gelöst.

Durch die in den Unteransprüchen 2-15 genannten Maßnahmen sind vorteilhafte Auswirkungen und Weiterbildungen der Erfindung möglich.

Dementsprechend zeichnet sich ein erfindungsgemäßes Verfahren, bei dem ein stangenförmiger Rohling mit wenigstens einer Förderwendel versehen wird, dadurch aus, dass die Förderwendel in ihrem Außendurchmesser und ihrer Nutenausbildung in einem Arbeitsgang durch ein Bearbeitungswerkzeug erzeugt wird. Hierdurch entfällt der Arbeitschritt für die gesonderte Herstellung eines Rohlings mit einem auf den Förderwendel-Durchmesser angepassten Schaft. Statt dessen kann ein zylindrischer stangenförmiger Rohling mit einem bestimmten Außendurchmesser für eine Vielzahl von Werkzeugen unterschiedlichen Förderwendel-Durchmessers als Ausgangsprodukt dienen. Das heißt, die Abstufung zwischen dem Einspannschaft und dem für die Förderwendel vorgesehenen Bereich muss dabei nicht separat in einem vorherigen Arbeitsschritt vorgenommen werden, da der Förderwendel-Durchmesser gleichzeitig mit der Förderwendelnut hergestellt wird. Somit erfolgt eine Bearbeitung der Förderwendelnut und des Förderwendelrückens. Dies ist insbesondere im Hinblick darauf von Bedeutung, dass für die Herstellung von Bohrern mit unterschiedlichem Nenndurchmesser bislang auch Rohlinge mit unterschiedlicher Abstufung bereitgestellt werden müssen. Es können auch mehrere Förderwendeln in einem Arbeitsgang eingearbeitet werden. Dies ist durch ein zeitlich und/oder räumlich versetztes Eingreifen von z.B. zwei Bearbeitungswerkzeugen an dem zu produzierenden Werkzeug möglich. Alternativ kann jede Förderwendel durch einen separaten Arbeitsgang angebracht werden, wobei hierzu auf das selbe Bearbeitungswerkzeug zurückgegriffen werden kann.

Die Förderwendel kann hierbei spanabhebend, beispielsweise durch Schleifen oder Fräsen mit einem ein entsprechendes Profil aufweisenden Schleif- oder Fräswerkzeug oder aber auch umformtechnisch eingearbeitet werden. In jedem Fall muss das entsprechende Bearbeitungswerkzeug, das üblicherweise um eine Werkzeugachse rotiert, mit einer entsprechenden Bearbeitungstiefe in den Rohling eintauchen und gleichzeitig Förderwendel-Außendurchmesser und Förderwendelnut herstellen.

Insbesondere für die spanabhebende Fertigung des Werkstücks ist es gemäß einer vorteilhaften Ausführungsform der Erfindung vorgesehen, den Rohling relativ zum Bearbeitungswerkzeug in eine Rotation um seine Längsachse zu versetzen und hierbei Rohling und Bearbeitungswerkzeug in der Längsrichtung und auch quer zu dieser relativ zueinander zu verfahren. Alternativ hierzu ist es vorgesehen, das Bearbeitungswerkzeug um den stillstehenden oder sich drehenden Rohling rotieren zu lassen und Rohling und Bearbeitungswerkzeug relativ zueinander in Längs- und Querrichtung zu verfahren. Durch eine Veränderung der Verfahrgeschwindigkeiten in Längs- und/oder Querrichtung und/oder der Rotationsgeschwindigkeiten ist es möglich in vielfältiger Weise auf das Aussehen des aus dem Rohling erzeugten Werkzeugs einzuwirken.

In einer vorteilhaften Ausführungsform der Erfindung wird dabei die Möglichkeit des erfindungsgemäßen Verfahrens genutzt, die steuerbaren Fertigungsparameter während des Herstellungsverfahrens zu variieren und somit Bohrer mit Förderwendeln zu schaffen, die unterschiedliche Eigenschaften durch die Variation der Geometrie der Förderwendel aufweisen.

So kann beispielsweise die Bearbeitungstiefe des Werkzeugs, d.h. der Vorschub des Werkzeugs in Querrichtung, während des Vorschubs des Rohlings variiert werden. Hierdurch ergibt sich zum einen eine Variation des Kerndurchmessers des Bohrers entlang seiner Länge L. Je nach Ausgestaltung des Bearbeitungswerkzeugs kann auch die Wandung der Nut der Förderwendel entsprechende Variationen durch Änderung der Bearbeitungstiefe aufweisen. Auch der Rückenstegradius bzw. der Förderwendel-Durchmesser kann durch die Variation der Bearbeitungstiefe beeinflusst werden. Unter dem Rückenstegradius ist hierbei der Abstand des Rückenstegs der Förderwendel von der Bohrerlängsachse zu verstehen. Der Förderwendeldurchmesser ergibt sich demnach aus dem doppelten Rückenstegradius gemäß dieser Definition.

In einer anderen Ausführungsform der Erfindung wird die Vorschubgeschwindigkeit während des Vorschubs variiert. Hierdurch lassen sich Bereiche der Förderwendel mit unterschiedlicher Steigung schaffen. Bei gleicher Bearbeitungstiefe des Werkzeugs kann hierbei auch die Rückenstegbreite der Förderwendel mit der Veränderung der Vorschubgeschwindigkeit variiert werden.

Die Veränderung der Bearbeitungstiefe und/oder der Vorschubgeschwindigkeit wird hierbei vorzugsweise in einem kontinuierlichen Vorgang vorgenommen, so dass die daraus resultierende Förderwendel kontinuierliche Übergänge ohne sprunghafte Form- oder Querschnittsänderungen aufweist, die zu Schwachstellen führen könnten.

Bei dem erfindungsgemäßen Verfahren kann auch der Wendelauslauf zum Einspannschaft hin in einem Arbeitsgang eingearbeitet werden. Grundsätzlich wäre es hierbei zwar möglich, den gewünschten Kerndurchmesser der Förderwendel ohne Vorschubgeschwindigkeit zwischen dem Rohling und dem Bearbeitungswerkzeug einzuarbeiten und anschließend die Förderwendel erfindungsgemäß anzubringen. Dies würde jedoch eine Ringnut ohne Wendel im Bereich des Übergangs zum Bohrerschaft ergeben. Daher wird vorzugsweise der Wendelauslauf so eingearbeitet, dass der Rückensteg des Wendelauslaufs zum Einspannschaft hin eine kontinuierliche Vergrößerung des Rückenstegradius r aufweist.

Durch die Vergrößerung des Rückenstegradius im Wendelauslauf der Förderwendel wird der Bohrmehltransport in den Bereich des Einspannschaftes verlängert, so dass sich die nutzbare Arbeitslänge des Werkzeugs vergrößert, d.h. im Falle eines Bohrers auf die gesamte in das Bohrloch einführbare Länge erstreckt.

Vorteilhafterweise wird hierbei die Vergrößerung des Rückenstegradius soweit fortgesetzt, bis der Rückenstegradius (r) das Maß des Schaftradius (R_{E}) erreicht. In diesem Fall geht der Rückensteg der entsprechenden Förderwendel unmittelbar in den Einspannschaft über, wodurch insbesondere die Fertigung des Werkzeugs erleichtert wird.

Weiterhin ist es von Vorteil, den Rückenstegradius im Wendelauslauf kontinuierlich zu vergrößern, so dass kein Knick oder keine Kante im Rückensteg auftritt. Anders ausgedrückt liegt eine kontinuierliche Radiusvergrößerung dann vor, wenn in der Änderung des Radius entlang der Werkzeugachse kein Sprung auftritt. Im mathematischen Sinne würde man von einer stetig differenzierbaren Funktion sprechen, die als theoretischer Idealfall in der Praxis soweit als möglich anzunähern ist.

Die kontinuierliche Radiusveränderung des Rückenstegs bewirkt eine hohe Steifigkeit des Werkzeugs im Bereich des Wendelauslaufs ohne sprunghafte Querschnittsveränderungen, die stets Schwachstellen bilden. Der unmittelbare Übergang des Wendelauslaufs in den Einspannschaft, d.h. das Rückenstegende, in dem der Rückensteg den Schaftradius (R_{E}) erreicht, kann dabei durchaus eine Abwinkelung oder Kante aufweisen, ohne dass die Steifigkeit des Bohrers beeinträchtigt wird. Es handelt sich hierbei im Falle einer am Einspannschaft beginnenden spanabhebenden Wendelherstellung um die Einstichstelle am Einspannschaft.

In einer Weiterbildung der Erfindung wird zudem im Bereich des Wendelauslaufs der Förderwendel zum Einspannschaft hin auch eine Vergrößerung des Nutenradius (n) vorgesehen. Als Nutenradius ist hierbei der Abstand des Nutengrundes zur Werkzeuglängsachse zu verstehen. Durch diese Maßnahme wird die Tiefe der Nut im Wendelauslauf nach und nach verringert, bis sie am Außenumfang des Einspannschaftes endet. Hierbei ist ein Span- bzw. Bohrmehltransport radial nach außen bis zum Nutende gewährleistet.

In einer besonders vorteilhaften Ausführungsform der Erfindung wird dabei das Nutende des Wendelauslaufs in axialer Richtung zum Einspannschaft hin versetzt in Bezug zum Rückenstegende angeordnet. Hierdurch ergibt sich im Falle eines Bohrers eine größere radiale Nutenöffnung außerhalb des Bohrlochs, selbst wenn der Bohrer bis zum Anschlag in das Bohrloch eingeführt ist.

Die Vergrößerung des Nutenradius endet vorzugsweise ebenfalls beim Schaftradius (R_{E}), d.h. die Nut der Förderwendel beginnt oder endet (je nach Blickrichtung) unmittelbar am Außenumfang des Einspannschaftes.

Vorzugsweise wird auch die Vergrößerung des Nutenradius kontinuierlich ausgebildet, wodurch zum einen der Material-, insbesondere Bohrmehltransport radial nach außen erleichtert und zum anderen die oben im Zusammenhang mit der erfindungsgemäßen Ausbildung des Rückenstegs genannten Vorteile im Hinblick auf die Werkzeugsteifigkeit weiter verbessert werden. Auch das Nutenende kann hierbei unter einem flachen Winkel in den Außenumfang des Einspannschaftes übergehen. Diese Übergangsstelle stellt im Falle einer am Einspannschaft beginnenden spanabhebenden Nutherstellung die Einstichstelle des Werkzeugs an der Mantelfläche des Schaftes dar.

Der Wendelauslauf kann hierbei ohne Beeinträchtigung der erfindungsgemäßen Vorteile relativ kurz ausgebildet werden. So kann bei den üblichen Steigungen der Förderwendel von Bohrern ein Wendelauslauf ausreichen, der sich über einen Winkelbereich von 10° bis 180°, bevorzugt über 90°, erstreckt.

Mit dem erfindungsgemäßen Verfahren können ohne weiteres eine oder mehrere gegenüber dem Schaftdurchmesser des Ausgangswerkstücks im Durchmesser reduzierte Förderwendeln auch mit Wendelauslauf in wenigstens einem sich über die gesamte Länge L_{A} der Förderwendel erstreckenden Arbeitsgang hergestellt werden, indem die Bearbeitungstiefe des entsprechenden Bearbeitungswerkzeugs, ausgehend vom Schaftradius (R_{E}) oder bis hin zum Schaftradius (R_{E}) wegabhängig verändert wird. Der Übergang zwischen Einspannschaft und der entsprechenden Förderwendel benötigt demnach keine separaten Fertigungsschritte.

In einer Weiterbildung dieses Herstellungsverfahrens wird wenigstens eine, vorzugsweise jede Förderwendel mit Wendelaußendurchmesser, Wendelnut und Wendelauslauf komplett in einem einzigen Arbeitsgang über die gesamte Länge L eingearbeitet. Bei einem mehrspiraligen Werkzeug erfolgt die Herstellung jeder einzelnen Förderwendel in einem Arbeitsgang.

Durch die oben beschriebene Herstellung eines erfindungsgemäßen Werkzeugs kann die Bereitstellung eines abgestuften Rohlings entfallen, dessen Durchmesser im Bereich der Förderwendel dem gewünschten Förderwendel-Durchmesser anzupassen ist. Erfindungsgemäß kann nunmehr ein durchgehender zylindrischer Rohling verwendet werden, der lediglich mit einer Normaufnahme bzw. standardisierten Aufnahme für genormte Werkzeugmaschinen, beispielsweise für Hammerbohrmaschinen mit einer sogenannten SDS-PLUS- oder SDS-MAX-Aufnahme, versehen wird. Im Bereich der Förderwendel muss lediglich ausreichend Material für die Förderwendel vorhanden sein. So kann beispielsweise eine zylinderförmige Stange verwendet werden, in der endseitig eine Normaufnahme als Einspannschaft angebracht wird. Die Normaufnahme (Einspannschaft) kann dabei durch umformende oder spanende Herstellung vor oder nach der Fertigung der Förderwendel eingearbeitet werden.

Falls ein anderweitig ausgebildeter Einspannschaft gewünscht wird, so kann bereits der Rohling entsprechend ausgewählt werden. Wird beispielsweise ein Einspannschaft mit Mehrkantprofil, beispielsweise Sechskantprofil, gewünscht, so kann eine Stange mit entsprechendem Profil als Rohling verwendet werden, so dass der Einspannschaft bereits durch Auswahl des Rohlings ohne weitere Bearbeitungsschritte zur Verfügung steht. Anschließend wird, wie oben angeführt, die komplette Förderwendel in ihrem Außendurchmesser und in ihrer Nutenausbildung eingearbeitet.

Weitere Einzelheiten der Erfindung werden in der Zeichnung anhand von schematisch dargestellten Ausführungsbeispielen beschrieben. Hierbei zeigt:
- Figur 1: einen Rohling,
- Figur 2: den Rohling aus Figur 1 mit bearbeiteten Enden,
- Figur 3: eine erste Ausführungsvariante eines zweigängigen Bohrers,
- Figur 4: eine zweite Ausführungsvariante eines zweigängigen Bohrers,
- Figur 5: eine dritte Ausführungsvariante eines zweigängigen Bohrers,
- Figur 6: eine vierte Ausführungsvariante eines zweigängigen Bohrers,
- Figur 7a: eine fünfte Ausführungsvariante eines eingängigen Bohrers,
- Figur 7b: einen Querschnitt durch den in Figur 7a dargestellten Bohrer,
- Figur 8a: eine sechste Ausführungsvariante eines eingängigen Bohrers,
- Figur 8b: einen Querschnitt durch den in Figur 8a dargestellten Bohrer,
- Figur 9a: eine siebte Ausführungsvariante eines eingängigen Bohrers,
- Figur 9b: einen Querschnitt durch den in Figur 9a dargestellten Bohrer und
- Figur 10a bis 10k: Ausschnitte von Querschnitten unterschiedlicher Bohrer im Bereich der Förderwendel.

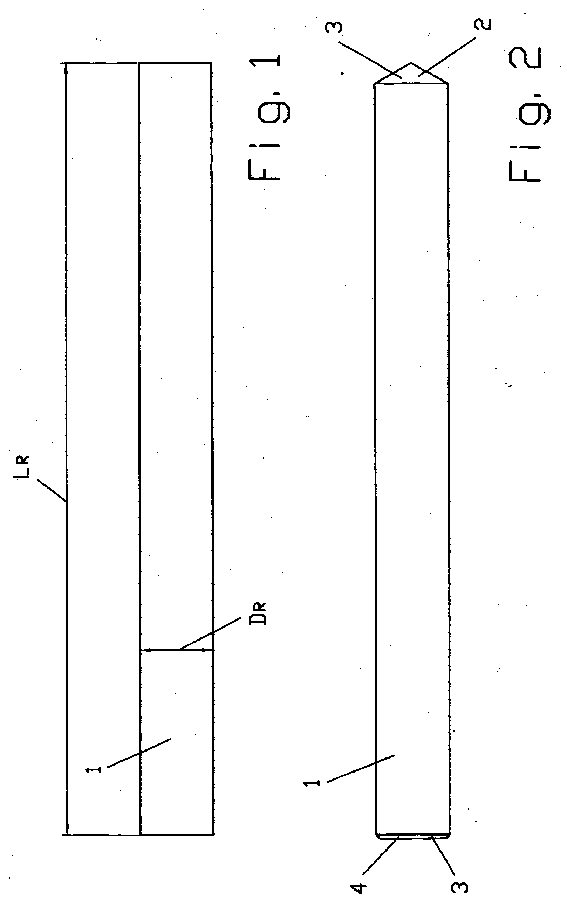

In Figur 1 ist ein abgesägter Rohling 1 in Seitenansicht dargestellt. Der Rohling weist über eine Länge L_{R} einen einheitlichen Durchmesser D_{R} auf.

Figur 2 zeigt den in Figur 1 dargestellten, in seinen Enden bearbeiteten Rohling, d.h. nach einer Bearbeitung einer Spitze 2 und eines gegenüberliegenden Endes 3. Die Spitze 2 ist als Kegel 4 ausgebildet und das Ende 3 ist mit einer Fase 5 versehen.

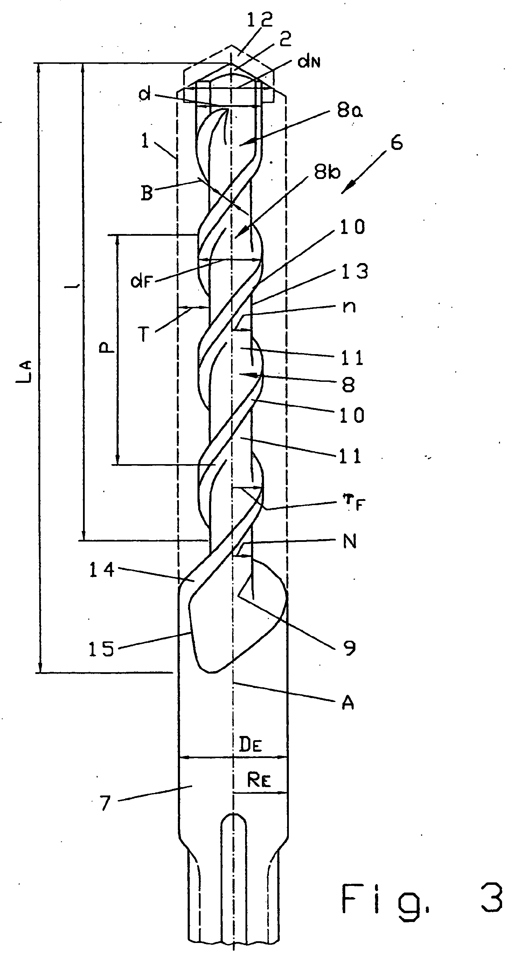

Figur 3 zeigt eine erste Variante eines Bohrers 6, welcher aus dem Rohling 1 durch das erfindungsgemäße Verfahren hergestellt ist. Der Bohrer 6 umfasst einen Einspannschaft 7, der nur teilweise mit seinem einem Wendelbereich 8 zugewandten Bereich dargestellt ist. Der dem Wendelbereich 8 gegenüberliegende, nur teilweise dargestellte Einspannbereich ist als SDS-PLUS-Schaft 33 (DE 37 16 915 A1) ausgebildet. Alternativ kann auch die Ausbildung anderer Normaufnahmen, beispielsweise einer SDS-MAX-Aufnahme (DE 25 51 125 C2), vorgesehen sein, oder auch der Ausgangsquerschnitt unverändert belassen werden, z. B. zylindrisch für die Aufnahme in einem Spannfutter.

Der Wendelbereich 8 umfasst einen Wendelauslauf 9. Der Wendelbereich 8 weist Föderwendeln 8a, 8b mit den sogenannten Rückenstegen 10 sowie Fördernuten 11 auf.

Der Einspannschaft 7 weist einen entsprechenden Durchmesser D_{E} bzw. den zugehörigen Schaftradius (R_{E}) auf, der entsprechend der gewünschten Normaufnahme ausgebildet ist und dem Durchmesser D_{R} des in Figur 1 gezeigten Rohlings entspricht. Im Falle einer sogenannten SDS-PLUS-Aufnahme beträgt der Durchmesser D_{E} des Einspannschaftes 7 10 mm. Der Wendelbereich 8 bzw. die Förderwendeln 8a, 8b weisen einen Förderwendel-Durchmesser d_{F} auf, welcher etwas kleiner ist als der Nenndurchmesser d_{N} des Bohrers 6, da der Nenndurchmesser d_{N} durch einen Schneidenein- oder aufsatz 12 definiert ist. Bei Bohrern ohne Schneidplatte 12 entspricht der Förderwendel-Durchmesser dem Nenndurchmesser oder auch "Nennweite" genannt. Der Nenndurchmesser d_{N} bzw. der Durchmesser d_{F} der Förderwendel 8 des erfindungsgemäßen Bohrers 6 ist kleiner als der Durchmesser D_{E} des Einspannschaftes 7.

Der Rückenstegradius r_{F}, der den Abstand des Rückenstegs 10 zur zentralen Längsachse A des Bohrers 6 angibt, entspricht der Hälfte des Förderwendel-Durchmessers d_{F} des Bohrers 6, der etwas kleiner ist als der Nenndurchmesser d_{N}.

Die Förderwendelnut 11 ist mit einem Nutenradius n in den Bohrer 6 eingearbeitet. Sie gibt den Abstand zwischen einem Nutgrund 13 und der Längsachse A des Bohrers 6 an. Aus der Differenz zwischen dem Schaftradius R_{E} und dem Nutenradius n ergibt sich die Bearbeitungstiefe T, welche angibt bis zu welcher Tiefe, bei der in einem Schritt erfolgenden Ausbildung einer der Förderwendeln 8a, 8b, Material von einem Rohling 1 (abgetragene Kontur mit gestrichelten Linien 1' dargestellt) abgenommen bzw. verdrängt wird. Figur 3 zeigt deutlich, dass gegenüber den heute üblichen Herstellungsverfahren mittels eines O-angepaßten Rohlings ein erhöhter Materialabtrag oder eine erhöhte Materialverdrängung zur Herstellung der Förderwendel erforderlich ist.

Wie anhand der Figur 3 erkennbar ist, ist im Bereich des Wendelauslaufs 9 der Rückenstegradius r_{F} variabel. In Richtung von der Bohrerspitze 2 zum Einspannschaft 7 hin betrachtet vergrößert sich der Rückenstegradius r_{F} kontinuierlich, bis er an dem Rückenstegende 14 den Schaftradius (R_{E}) erreicht, wobei der Rückensteg 10 in den Einspannschaft 7 übergeht.

In gleicher Weise ist wiederum, von der Bohrerspitze 2 zum Einspannschaft 7 hin betrachtet, der Nutenradius n vergrößert bis der Nutenradius n an dem Nutende 15 den Wert R_{E} des Rückenstegradius erreicht hat. An dem Nutende 15 geht dementsprechend auch der Nutengrund 13 der Fördernut 11 in den Einspannschaft 7 über. Das Nutende 15 ist hierbei axial versetzt zum Rückenstegende 14.

In der dargestellten Ausführungsform ist die Fördernut 11 gemeinsam mit dem Rückensteg 10 spanabhebend in den stangenförmigen Rohling 1 eingearbeitet, insbesondere eingefräst. Der Rohling 1 hat hierzu im Bereich der Förderwendel 8 eine zylindrische Ausgangsform entsprechend der gestrichelt eingezeichneten Kontur 1', welche dem dargestellten Bereich des Einspannschaftes 7 entspricht. Die Bearbeitung kann hierbei grundsätzlich von der Spitze 2 zum Einspannschaft 7 hin stattfinden. Eine Bearbeitungsrichtung vom Einspannschaft 7 zur Spitze 2 hin bietet jedoch den Vorteil, dass die Bearbeitung mit geringer Einstichtiefe begonnen werden kann.

Im vorliegenden Ausführungsbeispiel wurde die Bearbeitungstiefe des entsprechenden Fräswerkzeugs derart variiert, dass innerhalb einer Viertelumdrehung, d.h. beim Überstreichen eines Winkels von 90°, bereits das endgültige Maß sowohl des Rückenstegradius r_{F} als auch des Nutenradius n erreicht wurde.

Ein solcher schneller Übergang bietet den Vorteil einer möglichst großen Arbeitslänge L_{A} des Wendelbereichs 8. Der Wendelbereich 8 passt in das durch den Nenndurchmesser d_{N} bestimmte Bohrloch soweit hinein, solange der Rückenstegradius r_{F} kleiner oder gleich der halben Nennweite d_{N} ist. Mit der Vergrößerung des Rückenstegradius r_{F} schlägt der Bohrer 6 beim vollständigen Einführen in das Bohrloch an. Wie unschwer erkennbar ist, ist jedoch die Nut 11 der Förderwendel 8 zum Einspannschaft 7 hin fortgesetzt, d.h. es findet eine Bohrmehlförderung über den Bereich der Vergrößerung des Rückensteges 10 hinaus statt. Auch beim vollen Eintauchen des Bohrers 6 bis zum Anschlag in das entsprechende Bohrloch wird dieses durch den Bohrer 6 nicht verschlossen.

Das Nutende 15 und/oder das Rückenstegende 14, welche die Einstich- oder Eintauchstellen des Arbeitswerkzeugs in den Rohling 1 darstellen, können kontinuierlich gekrümmt oder aber auch mit einer Kante ausgebildet sein, wie anhand der Übergangsstelle 15 sichtbar ist.

Der kontinuierliche Übergang des Rückenstegradius r_{F} und im vorliegenden Ausführungsbeispiel auch des Nutenradius n bewirken über die verbesserte Bohrmehlförderung und die günstige Fertigung hinaus eine hohe Steifigkeit des Bohrers 6 im Bereich des Wendelauslaufs 9 durch Vermeidung ungünstiger Kerbwirkung; dies kommt der Standzeit des Werkzeuges zu Gute.

Dem Bohrer 6 kann im Bereich der Spitze 2 nach der Fertigung der Förderwendel 8 die Hartmetall-Schneidplatte 12 (mit gestrichelten Linien dargestellt) zugeordnet sein. Diese ist vorzugsweise in einem im Bereich der Spitze 2 angeordneten Querschlitz gehalten. Es kann jedoch auch ein Vollhartmetallkopf angebracht werden.

Der in Figur 3 dargestellte zweigängige Bohrer 6 weist mit Ausnahme des Förderwendelauslaufs 9 zwei durchgehend gleichmäßige Förderwendeln 8a, 8b mit konstantem Steigungswinkel P als auch mit konstantem Wendeldurchmesser d_{F} bzw. Rückenstegradius r_{F} sowie konstanter Bandbreite B_{R} bzw. Rückenstegbreite auf.

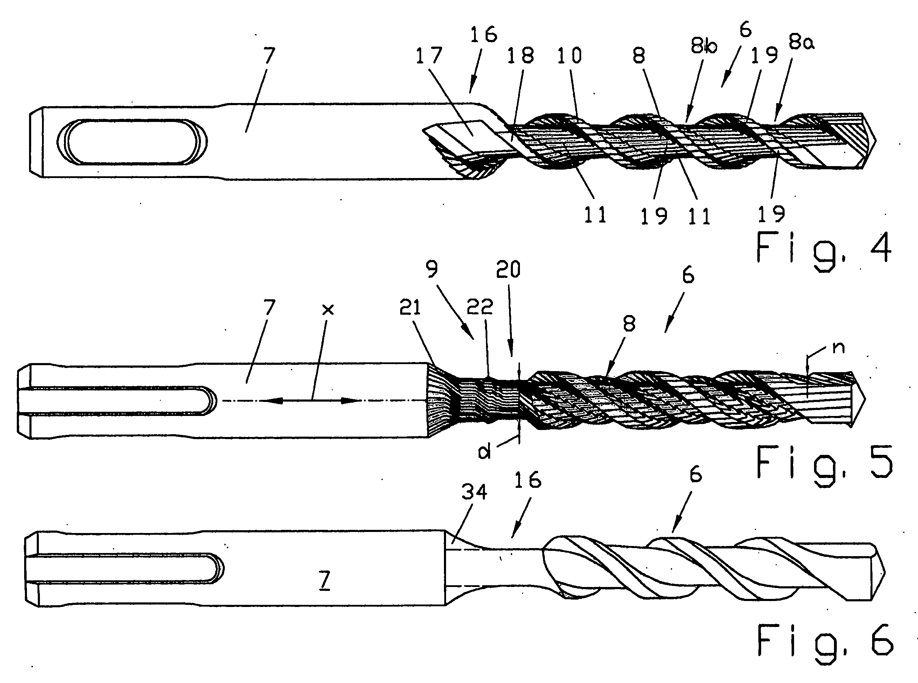

Figur 4 zeigt eine zweite Ausführungsvariante eines zweigängigen Bohrers 6. Der in Figur 4 dargestellte Bohrer 6 ist analog zu dem in Figur 3 dargestellten Bohrer gefertigt. In einem Übergangsbereich 16, in welchem ein Wendelbereich 8 in einen Einspannschaft 7 übergeht, weist der Bohrer 6 einen auf Kegelmänteln 17, 18 liegenden Verlauf eines Rückenstegs 10 und einer Fördernut 11 auf. Der Wendelbereich 8 ist durch eine Vielzahl kleiner Flächen 19 gebildet. Durch diese sind beim Fräsen von den Wendelbereich 8 bildenden Förderwendeln 8a, 8b entstehende sogenannte Facetten angedeutet. Die Kanten der Flächen 19 entstehen durch das aufeinandertreffen nebeneinanderliegender Flächen 19 mit unterschiedlichen Winkeln. Durch die Kanten im seitlichen Bereich der Rückenstege 10 erhalten die Förderwendeln 8a, 8b gute Transporteigenschaften, da das Bohrmehl bei der Drehung des Bohrers in den Nutgrund 13 der Fördernuten 11 gedrückt wird und somit die Reibung des Bohrmehls an der Bohrlochwand vermindert wird.

In Figur 5 ist eine weitere Ausführungsvariante eines zweigängigen Bohrers 6 dargestellt. Gegenüber den in den Figuren 3 und 4 gezeigten Bohrern besitzt der in Figur 5 gezeigte Bohrer 6 einen anders gestalteten Wendelauslauf 9. Der Wendelauslauf 9 ist hier nicht als stetige Erweiterung einer Förderwendel 8a, 8b zu einem Einspannschaft 7, sondern als Einschnürung 20 ausgebildet. Die Einschnürung 20 weist einen etwa einem doppelten Nutenradius n entsprechenden kleinsten Durchmesser d auf. Die Einschnürung 20 ist technisch durch einen kurzzeitigen Stillstand oder eine Verlangsamung der Relativbewegung von Bearbeitungswerkzeug und Bohrer 6 in einer Längsrichtung x erzeugt. Der Übergang auf den Einspannschaft 7 erfolgt durch einen kegelförmigen Abschnitt 21, welcher Bestandteil des Wendelauslaufs 9 ist. Durch ein kurzeitiges Beibehalten der Position des Bearbeitungswerkzeugs zum Bohrer 6 kann im Wendelauslauf 9 ein Wulst 22 ausgebildet sein, soweit das Werkzeug entsprechend profiliert ist.

In Figur 6 ist eine weitere Ausführungsvariante eines zweigängigen Bohrers 6 dargestellt. Gegenüber den in den Figuren 3 bis 5 gezeigten Bohrern ist der in Figur 6 gezeigte Bohrer 6 nicht durch eine spanabhebende Bearbeitung, sondern durch ein umformtechnisches Verfahren, insbesondere durch Rollwalzen, hergestellt. Ein Übergangsbereich 16 ist zu einem Schaft 7 hin als Anschlag 34 ausgebildet.

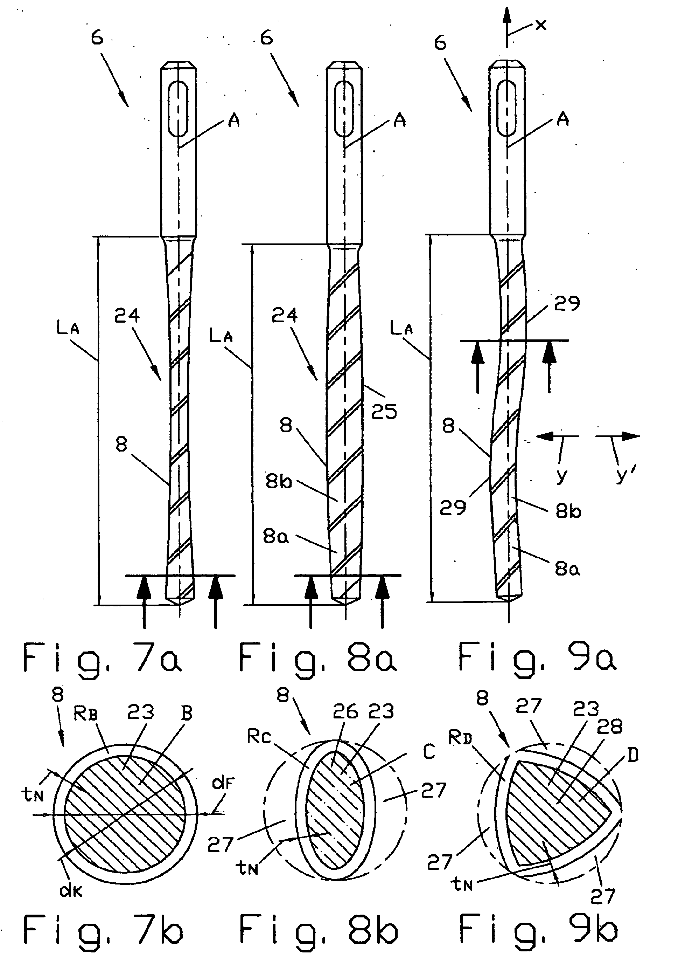

In den Figuren 7a bis 9b sind drei weitere Varianten von eingängigen Bohrern in Seitenansicht bzw. im Querschnitt dargestellt. Diesen Bohrern ist es gemeinsam, dass ein Kern 23 einer Förderwendel 8 einen kreisförmigen, elliptischen oder bogendreieckförmigen Querschnitt B, C, D aufweist. Dieser Querschnitt weist wenigstens bereichsweise über eine Arbeitslänge L_{A} der Förderwendel 8 in seiner Querschnittsfläche und/oder in seiner Orientierung zu einer Längsachse A der Bohrers stetige Veränderungen auf. Entsprechend beschreibt ein den Kern 23 umgebender Rückensteg 10 einen den Kern 23 umschließenden kreisförmigen, elliptischen oder bogendreieckförmigen Ring R_{B}, R_{C}, R_{D}.

Hierdurch entsteht gemäß der Figuren 7a und 7b ein Bohrer 6, welcher einen taillierten Wendelbereich 8 aufweist. Ein derartiger Bohrer 6 besitzt bei exakter Führung durch die Bohrmaschine eine geringe Reibung im Bohrloch, da dieser in einem mittleren, verjüngten Bereich 24 des Wendelbereichs 8 nicht an der Bohrlochwand reibt. Eine Nuttiefe t_{N}, welche auch als Höhe des Rückenstegs 10 bzw. als Differenz zwischen dem Förderwendeldurchmesser d_{F} und dem Kerndurchmesser d_{K} bezeichnet werden kann, ist über die Arbeitslänge L_{A} des Wendelbereichs 8 konstant. Dies bedeutet, dass sich der Förderwendel-Durchmesser d_{F} und der Kerndurchmesser d_{K} über die Arbeitslänge L_{A} bei gleichbleibender Differenz über etwa die halbe Arbeitslänge L_{A} stetig verkleinern und anschließend über die restliche Arbeitslänge L_{A} stetig vergrößern.

Der in den Figuren 8a und 8b dargestellte Bohrer 6 besitzt hinsichtlich eines Kerns 23 eine konstante elliptische Querschnittsfläche C, welche über eine Arbeitslänge L_{A} kontinuierlich um etwa 180° gedreht ist. Hierdurch entsteht die in der Seitenansicht (Figur 8a) sichtbare Verdickung 25 in einem Mittelbereich 24 des Wendelbereichs 8, da hier die in Figur 8b gezeigte Ellipse 26 in einer etwa um 90° gedrehten Position steht. Ein derartiger Bohrer 6 erlaubt trotz eines relativ großen Kerndurchmessers (lange Achse der Ellipse) den Transport von großen Bohrmehlmengen, da das in Freiräumen 27 liegende Bohrmehl insbesondere durch die schraubenartige Verdrillung der den Wendelbereich bildenden Förderwendeln 8a, 8b mittransportiert wird. Der Bohrer 6 weist eine konstante Nuttiefe t_{N} auf.

Der in den Figuren 9a und 9b dargestellte Bohrer 6 besitzt hinsichtlich eines Kerns 23 eine konstante Querschnittsfläche D eines bogenförmigen Dreiecks 28, welche über eine Arbeitslänge L_{A} stetig verdrillt ist. Durch die Verdrillung entstehen einseitige Ausbauchungen 29. Ein derartiger Bohrer 6 erlaubt bei geringer Reibung an der Bohrlochwand trotz eines relativ großen Kerndurchmessers den Transport von großen Bohrmehlmengen, wobei das in Freiräumen 27 (zwischen dem Wendelbereich des Bohrers und der Bohrlochwand) liegende Bohrmehl insbesondere durch die schraubenartige Verdrillung der den Wendelbereich 8 bildenden Förderwendeln 8a, 8b aus dem Bohrloch gefördert wird. Der Bohrer 6 weist eine konstante Nuttiefe t_{N} auf. Bei der Fertigung des Bohrers 6 bewegt sich ein Fräser beispielsweise in x-Richtung entlang des sich drehenden Bohrers 6 und fährt hierbei gleichzeitig unter Beibehaltung der Kernquerschnittfläche D quer zur Längsrichtung x abwechselnd in entgegengesetzte Richtungen y, y'. Hierdurch ist die Eindringtiefe des Fräsers in den Rohling je nach y-Position unterschiedlich. Ein solches Fertigungsverfahren ist auch geeignet, um den in den Figuren 8a und 8b gezeigten Bohrer herzustellen.

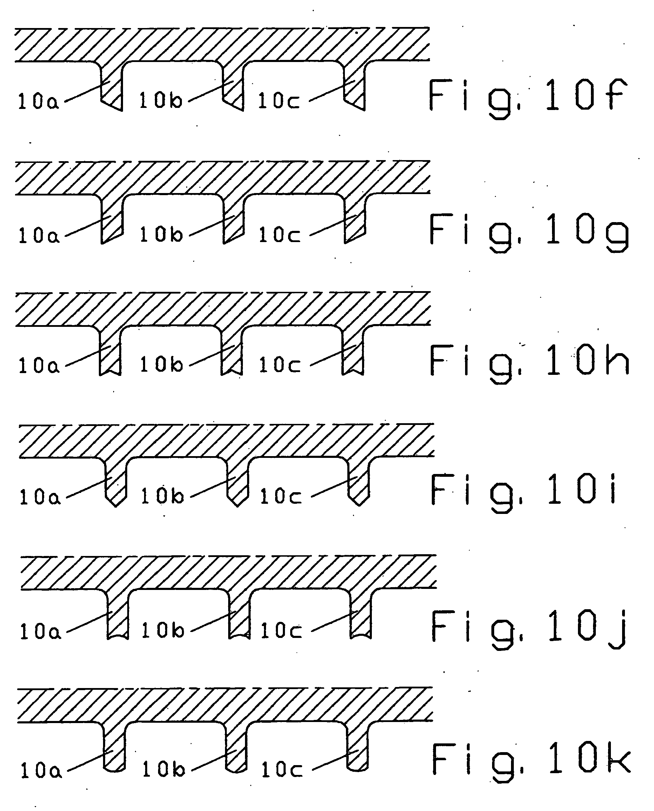

In Figur 10a bis 10k sind ausschnittartige, schematische Querschnitte durch Förderwendeln dargestellt.

Figur 10a zeigt einen Wendelbereich 8 eines Bohrers 6, welcher durch eine Förderwendel 8a gebildet ist. Die Förderwendel 8a besteht aus zwei hohen Rückenstegen 10a, 10c und einem zwischen diesen liegenden kleinen Rückensteg 10b. Alle drei Rückenstege 10a, 10b, 10c weisen Stegflächen 30a, 30b, 30c auf welche zu einer zentralen Längsachse A des Bohrers 6 geneigt verlaufen. Mit gestrichelten Linien ist in Figur 10a ein profiliertes Bearbeitungswerkzeug 31 schematisch angedeutet, welches die Förderwendel 8a ausbildet. Selbstverständlich ist im Unterschied zur Darstellung der Rohling beim eigentlichen Fräsvorgang nur in dem Bereich bearbeitet, in welchem der Fräser 31 bereits Material abgeschält hat.

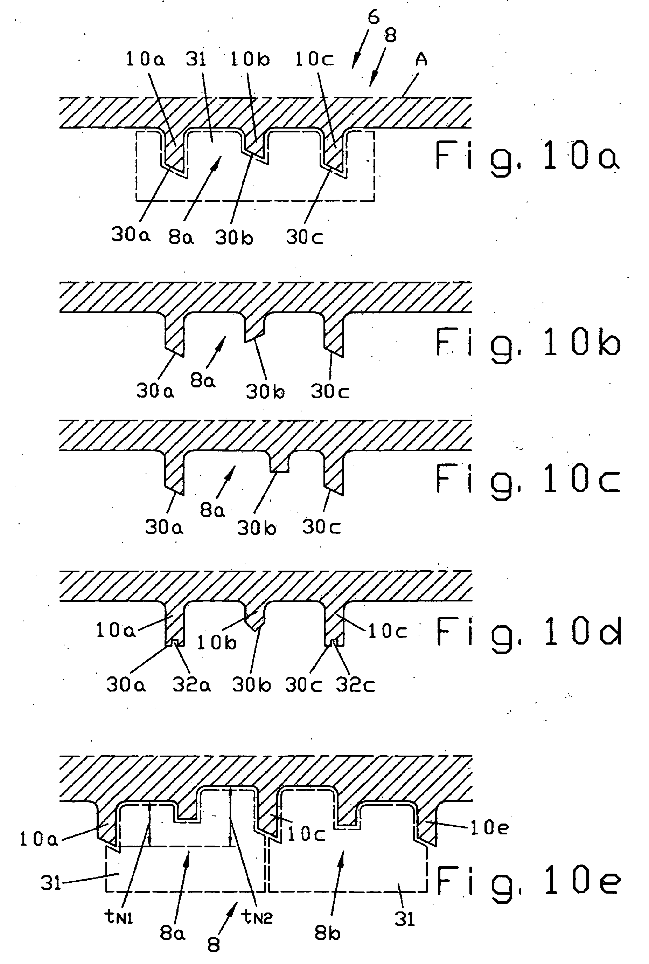

Die Figuren 10b und 10c zeigen weitere Varianten für die Ausbildung von Wendeln 8a bzw. Stegflächen 30a, 30b, 30c.

In Figur 10d sind zwei Rückenstege 10a, 10c dargestellt, welche zu einer nicht dargestellten Wandung eines Bohrlochs hin Nuten 32a, 32c aufweisen, die in Stegflächen 30a, 30c verlaufen. Eine Stegfläche 30b eines Rückenstegs 10b ist im Querschnitt giebelförmig ausgebildet.

Figur 10e zeigt einen Wendelbereich 8, welcher durch zwei Wendeln 8a, 8b gebildet ist. Die beiden Wendeln 8a, 8b werden durch Bearbeitungswerkzeuge 31 geformt, die mit gestrichelten Linien schematisch angedeutet sind. Die Bearbeitungswerkzeuge 31 greifen zeitlich und/oder räumlich versetzt am Rohling an. Große Rückenstege 10a, 10c, 10e sind erst dann vollständig ausgebildet, wenn beide Bearbeitungswerkzeuge 31 den Rohling bearbeitet haben, da ein Werkzeug diese jeweils etwa nur zur Hälfte ausbildet. Die zu den Förderwendeln 8a, 8b gehörenden Fördernuten 11 weisen unterschiedliche Nuttiefen t_{N1} und t_{N2} auf. Für die Ausbildung eines Wendelauslaufs zum Bohrerschaft hin ist es ausreichend, wenn eines der Bearbeitungswerkzeuge 31 den Rohling im Bereich des Wendelauslaufs um 360° bearbeitet.

In den Figuren 10f bis 10k sind weitere Varianten für die Ausbildung von Rückenstegen 10a, 10b, 10c dargestellt. Hierbei ist insbesondere eine unterschiedliche Gestaltung der Stegflächen der Rückenstege 10a, 10b, 10c vorgesehen. Die Stegflächen sind im Querschnitt als V- oder U-förmige Vor- oder Rücksprünge oder Schrägen ausgebildet.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere kann das erfindungsgemäße Verfahren, wie bereits erwähnt, auch dazu verwendet werden, durch Änderung der Vorschubgeschwindigkeit die Steigung der Förderwendel über wenigstens einen Abschnitt der Förderwendel zu variieren. Die Variation der Vorschubgeschwindigkeit bei gleicher Bearbeitungstiefe verursacht hierbei bei entsprechender Werkzeugwahl zugleich eine Veränderung der Rückenstegbreite, die häufig auch Bandbreite genannt wird und nicht mit dem Rückenstegradius zu verwechseln ist.

Ebenso kann durch Veränderung der Bearbeitungstiefe sowohl der Kerndurchmesser als auch das Profil der Fördernut variiert werden. Dieses Profil der Fördernut ist entsprechend abhängig von der Auswahl des verwendeten Bearbeitungswerkzeugs. Eine Variation der Bearbeitungstiefe des entsprechenden Bearbeitungswerkzeugs kann abhängig von der Form des Bearbeitungswerkzeugs neben dem Kerndurchmesser auch die Geometrie der Fördernut bzw. des Rückenstegs beeinflussen.

Durch die beschriebenen Variationen sind beispielsweise Bohrer oder Fräser herstellbar, bei denen lediglich der Wendeldurchmesser bzw. Rückenstegradius bei konstanter Steigung und Bandbreite (Rückenstegbreite) vorliegen. Solche Bohrer verursachen z.B. eine geringere Reibung im Bohrloch.

Auch Werkzeuge mit Variationen in der Steigung und Bandbreite sind denkbar, wobei der Wendeldurchmesser konstant oder ebenfalls variiert sein kann.

Wesentlich bei dem erfindungsgemäßen Verfahren ist in jedem Fall die Fertigung der Förderwendel in einem Arbeitsgang aus einem stangenförmigen Rohling.

### Bezugszeichenliste:

- 1: Rohling
- 1': anfängliche Kontur des Rohlings
- 2: Spitze von 1 bzw. 6
- 3: Ende von 1 bzw. 6
- 4.: Kegel
- 5: Fase
- 6: Bohrer
- 7: Einspannschaft
- 8: Wendelbereich
- 8a, 8b: Förderwendel
- 9: Förderwendelauslauf
- 10,: Rückensteg
- 10a, 10b, 10c: Rückensteg
- 11: Fördernut
- 12: Hartmetallplatte
- 13: Nutgrund
- 14: Rückenstegende
- 15: Nutenende
- 16: Übergangsbereich (8 in 7)
- 17: Kegelmantel
- 18: Kegelmantel
- 19: kleine Fläche
- 20: Einschnürung
- 21: kegelförmiger Abschnitt von 9
- 22: Wulst
- 23: Kern
- 24: mittlerer Bereich von 8
- 25: Verdickung
- 26: Ellipse
- 27: Freiraum
- 28: Dreieck
- 29: Ausbauchung
- 30a, 30b, 30c: Stegfläche von 10
- 31: Bearbeitungswerkzeug
- 32a, 32c: Nut in 10a bzw. 10c
- 33: SDS-Plus Schaft
- 34: Anschlag

- A: zentrale Längsachse von 6
- B: Querschnittsfläche Kreis
- B_{R}: Rückenstegbreite
- C: Querschnittsfläche von 26
- D: Querschnittsfläche von 28
- D_{E}: Schaftdurchmesser
- D_{R}: Durchmesser von 1
- d: Durchmesser der Einschnürung 20
- d_{F}: Durchmesser von 8 (Förderwendeldurchmesser)
- d_{K}: Kerndurchmesser
- d_{N}: Nennweite
- L_{A}: Arbeitslänge von 8
- L_{R}: Länge von 1
- n: Nutenradius
- P: Steigungswinkel
- R_{E}: Schaftradius
- r_{F}: Rückenstegradius
- T: Bearbeitungstiefe = R_{E} - n
- t_{N}, t_{N1}, t_{N2}: Nuttiefe

## Patentansprüche

1. Verfahren zur Herstellung eines Bohrers (6) oder Fräsers mit wenigstens einer Förderwendel (8a, 8b) ausgehend von einem stangenförmigen Rohling (1), wobei die Förderwendel (8a, 8b) in einem einzigen Arbeitsgang eingebracht wird und hierbei der Rohling (1) einen Durchmesser (D_{R}) aufweist, der größer ist als der Durchmesser (d_{F}) der Förderwendel (8a, 8b) und wobei der Förderwendel-Durchmesser (d_{F}) gleichzeitig mit der Förderwendelnut (11) hergestellt wird.

2. Verfahren nach Anspruch 1, **dadurch gekennzeichnet, dass** der Rohling (1) relativ zu einem Bearbeitungswerkzeug (31) in eine Rotation versetzt wird und ein Vorschub des Bearbeitungswerkzeugs (31) und/oder des Rohlings (1) in eine Längsrichtung (x) und/oder Querrichtung (y) des Rohlings (1) erfolgt.

3. Verfahren nach Anspruch 1, **dadurch gekennzeichnet, dass** ein Bearbeitungswerkzeug (31) um den stillstehenden oder sich drehenden Rohling (1) rotiert, wobei ein Vorschub des Bearbeitungswerkzeugs (31) und/oder des Rohlings (1) in eine Längsrichtung x und/oder Querrichtung y des Rohlings (1) erfolgt.

4. Verfahren nach einem der vorgenannten Ansprüche, **dadurch gekennzeichnet, dass** die Vorschubgeschwindigkeit bzw. die Relativgeschwindigkeit des Rohlings (1) und des Bearbeitungswerkzeugs (31) zueinander während des Vorschubs variiert wird.

5. Verfahren nach einem der vorgenannten Ansprüche, **dadurch gekennzeichnet, dass** eine Veränderung der Bearbeitungstiefe (T) und/oder der Vorschubgeschwindigkeit kontinuierlich vorgenommen wird.

6. Verfahren nach einem der vorhergehenden Ansprüche, **dadurch gekennzeichnet, dass** der stangenförmige Rohling (1) einen über seine gesamte Länge (L_{R}) gleichbleibenden Durchmesser (D_{R}) aufweist.

7. Verfahren nach einem der vorgenannten Ansprüche, **dadurch gekennzeichnet, dass** ein Rohling (1) mit einer standardisierten Aufnahme z.B. SDS-Plus oder SDS-Max für genormte Hammerbohrmaschinen verwendet wird.

8. Verfahren nach einem der vorhergehenden Ansprüche, **dadurch gekennzeichnet, dass** am Werkzeug (6) zwischen der Wendel (8) und dem Einspannschaft (7) ein Wendelauslauf (9) erzeugt wird, welcher durch eine verlangsamte Relativbewegung der Werkzeuge (6, 31) in X-Richtung bzw. eine beschleunigte Drehung des Werkzeugs (6) um seine Längsachse (A) oder eine beschleunigte Drehung des Bearbeitungswerkzeugs (31) um das Werkzeug (6) entsteht.

9. Verfahren nach Anspruch 8, **dadurch gekennzeichnet, dass** der Wendelauslauf (9) im gleichen Arbeitsgang mit der Förderwendel (8) in einen stangenförmigen Rohling (1) eingearbeitet wird, in dem die Bearbeitungstiefe (T) ausgehend vom Schaftradius (R_{E}) oder zu diesem hinführend in Abhängigkeit vom Vorschub verändert wird.

10. Verfahren nach einem Ansprüche 8 oder 9, **dadurch gekennzeichnet, dass** der Wendelauslauf (9) über einen Winkelbereich von 10° bis 180° und vorzugsweise 90° angebracht wird.

11. Verfahren nach einem der vorgenannten Ansprüche, **dadurch gekennzeichnet, dass** der Übergang der Spirale (8a, 8b) in den Schaftbereich (7) durch eine 360°-Drehung eingebracht wird.

12. Verfahren nach einem der vorgenannten Ansprüche, **dadurch gekennzeichnet, dass** die Förderwendel (8) spanabhebend oder umformtechnisch eingearbeitet wird.

13. Verfahren nach einem der vorhergehenden Ansprüche, **dadurch gekennzeichnet, dass** die Förderwendel (8) mit einem spanabhebenden Verfahren, wie zum Beispiel Fräsen hergestellt wird, auf welches insbesondere eine Nachbearbeitung der Förderwendel durch Rollwalzen zur Oberflächenverdichtung erfolgt.

14. Verfahren nach einem der vorhergehenden Ansprüche, **dadurch gekennzeichnet, dass** die Förderwendel (8) mit einem umformtechnischen Verfahren, wie zum Beispiel Strangpressen hergestellt wird, wobei der stangenförmige Rohling (1) vorzugsweise durch eine Matrize gepresst wird.

15. Verfahren nach einem der vorhergehenden Ansprüche, **dadurch gekennzeichnet, dass** abhängig vom Bearbeitungswerkzeug die entstehende Nuttiefe (t_{N}) immer konstant ist.

## Claims

1. Method for producing a drill bit (6) or milling tool, with at least one conveying helix (8a, 8b), proceeding from a rod-shaped blank (1), wherein the conveying helix (8a, 8b) is introduced in a single operation and in this case the blank (1) has a diameter (D_{R}) which is greater than the diameter (d_{F}) of the conveying helix (8a, 8b), and whereby the conveying helix diameter (d_{F}) is produced at the same time as the conveying helix flute (11).

2. Method according to claim 1, **characterised in that** the blank (1) is offset in rotation in relation to a machine tool (31) and an advance of the machine tool (31) and/or of the blank (1) takes place in a longitudinal direction (x) and/or transverse direction (y) of the blank (1).

3. Method according to claim 1, **characterised in that** a machine tool (31) rotates about the stationary or rotating blank (1), whereby an advance of the machine tool (31) and/or of the blank (1) takes place in a longitudinal direction (x) and/or transverse direction (y) of the blank (1).

4. Method according to one of the aforementioned claims, **characterised in that** the advancing speed or the relative speed of the blank (1) and of the machine tool (31) in relation to one another is varied during the advance.

5. Method according to one of the aforementioned claims, **characterised in that** a variation in the machining depth (T) and/or in the advancing speed is carried out continuously.

6. Method according to one of the preceding claims, **characterised in that** the rod-shaped blank (1) has a diameter (D_{R}) which is constant over its entire length (L_{R}).

7. Method according to one of the aforementioned claims, **characterised in that** a blank (1) with a standardized mount for example, SDS-Plus or SDS-Max is used for standardized hammer-drilling machines.

8. Method according to one of the preceding claims, **characterised in that** on the tool (6) between the helix (8) and the clamping shaft (7) a helix runout (9) is produced, which is obtained as a result of a decelerated relative movement of the tools (6, 31) in X direction or an accelerated rotation of the tool (6) about its longitudinal axis (A) or an accelerated rotation of the machine tool (31) about the tool (6).

9. Method according to claim 8, **characterised in that** the helix runout (9) is worked in the same procedure as the conveying helix (8) into a rod-shaped blank (1), in which proceeding from the shaft radius (R_{E}) or leading toward the latter, the machining depth (T) is varied as a function of the advance.

10. Method according to one of the aforementioned claim 8 or 9, **characterised in that** the helix runout (9) is applied over an angular range of 10° to 180° and preferably 90°.

11. Method according to one of the aforementioned claims, **characterised in that** the transition of the helix (8a, 8b) into the shaft region (7) is introduced by a 360° rotation.

12. Method according to one of the aforementioned claims, **characterised in that** the conveying helix (8) is worked in by chip removal or by forming technology.

13. Method according to one of the preceding claims, **characterised in that** the conveying helix (8) is produced by means of a chip-removing method, such as e.g. milling, which is followed, in particular, by a re-machining of the conveying helix by rolling for surface compaction.

14. Method according to one of the preceding claims, **characterised in that** the conveying helix (8) is produced by means of a forming method, such as, for example, extrusion, the rod-shaped blank (1) preferably being pressed by means of a die.

15. Method according to one of the preceding claims, **characterised in that**, depending on the machine tool, the resulting flute depth (t_{N}) is always constant.

## Revendications

1. Procédé de fabrication d'un foret (6) ou d'une fraise comportant au moins une hélice de transfert (8a, 8b) à partir d'une ébauche (1) en forme de barre selon lequel
on réalise l'hélice de transfert (8a, 8b) au cours d'une unique opération l'ébauche (1) a un diamètre (D_{R}) supérieur au diamètre (d_{F}) de l'hélice de transfert (8a, 8b), et
le diamètre (d_{F}) de l'hélice de transfert est réalisé en même temps que l'on réalise la gorge de l'hélice de transfert (11).

2. Procédé selon la revendication 1,
**caractérisé en ce qu'**
on fait tourner l'ébauche (1) par rapport à un outil d'usinage (31) et on fait avancer l'outil d'usinage (31) et/ou l'ébauche (1) dans la direction longitudinale (X) et/ou dans la direction transversale (Y) de l'ébauche (1).

3. Procédé selon la revendication 1,
**caractérisé en ce que**
un outil d'usinage (31) tourne autour de l'ébauche (1), immobile ou en rotation et l'avance de l'outil (31) et/ou de l'ébauche (1) se fait dans la direction longitudinale (X) et/ou dans la direction transversale (Y) de l'ébauche(1).

4. Procédé selon l'une quelconque des revendications précédentes,
**caractérisé en ce que**
la vitesse d'avance ou la vitesse relative de l'ébauche (1) et de l'outil (31) varient pendant le mouvement d'avance.

5. Procédé selon l'une quelconque des revendications précédentes,
**caractérisé en ce que**
une variation de la profondeur d'usinage (T) et/ou de la vitesse d'avance sont continues.

6. Procédé selon l'une des revendications précédentes,
**caractérisé en ce que**
l'ébauche (1) en forme de barre a un diamètre (D_{R}) constant sur toute sa longueur (L_{R}).

7. Procédé selon l'une des revendications précédentes,
**caractérisé en ce qu'**
on utilise une ébauche (1) avec un moyen de fixation normalisé par exemple selon le système SDS-plus ou SDS-Max pour des perforateurs normalisés.

8. Procédé selon l'une des revendications précédentes,
**caractérisé en ce que**
sur l'outil (6), entre l'hélice (8) et la queue (7), on réalise une sortie d'hélice (9) obtenue par un mouvement relatif ralenti des outils (6, 31) dans la direction (X) ou une rotation accélérée de l'outil (6) autour de son axe longitudinal (A) ou une rotation accélérée de l'outil d'usinage (31) autour de l'outil (6).

9. Procédé selon la revendication 8 ,
**caractérisé en ce que**
la sortie d'hélice (9) est usinée au cours de la même opération que l'hélice de transfert (8) dans une ébauche (1) en forme de barre, opération selon laquelle on modifie la profondeur d'usinage (T) à partir du rayon (R_{E}) de la tige ou en direction de celui-ci, en fonction de l'avance.

10. Procédé selon l'une des revendications précédentes 8 or 9
**caractérisé en ce qu'**
on réalise la sortie d'hélice (9) dans une plage angulaire de 10° à 180°, de préférence de 90°.

11. Procédé selon l'une des revendications précédentes,
**caractérisé en ce qu'**
on réalise la transition de la spirale (8a, 8b) dans la zone de la tige (7) par une rotation de 360°.

12. Procédé selon l'une des revendications précédentes,
**caractérisé en ce qu'**
on usine l'hélice de transfert (8) par un usinage avec enlèvement de copeaux ou par transformation.

13. Procédé selon l'une des revendications précédentes,
**caractérisé en ce qu'**
on réalise l'hélice de transfert (8) par un procédé de transformation tel que par exemple l'extrusion à la presse et l'ébauche (1) en forme de barre est pressée de préférence à travers une matrice.

14. Procédé selon l'une des revendications précédentes,
**caractérisé en ce que**
l'hélice de transfert (8) est fabriquée selon un procédé de transformation tel que par exemple l'extrusion à la presse et l'ébauche (1) en forme de tige est notamment pressée avec une matrice.

15. Procédé selon l'une des revendications précédentes,
**caractérisé en ce que**
la profondeur de rainure (t_{N}) obtenue est toujours constante en fonction de l'outil d'usinage.
